# EUROPÄISCHE PATENTSCHRIFT

(11) **EP 0 897 358 B1**
(45) Veröffentlichungstag und Bekanntmachung des Hinweises auf die Patenterteilung: **22.08.2001**
(21) Anmeldenummer: 97905040.8
(22) Anmeldetag: 18.02.1997
(51) Int. Cl.: B60S 9/10, B66C 23/80

(54) **FAHRBARE ARBEITSMASCHINE MIT STÜTZAUSLEGERN**
MOBILE MACHINE WITH SUPPORTING STRUTS
ENGIN MOBILE A BRAS D'APPUI

(30) Priorität: 03.05.1996 DE 19617505
(43) Veröffentlichungstag der Anmeldung: 24.02.1999
(73) Patentinhaber: PUTZMEISTER Aktiengesellschaft, 72631 Aichtal (DE)
(72) Erfinder: WOLFRAM, Markus, D-72631 Aichtal (DE); SCHILLINGER, Hans-Dieter, D-78579 Neuhausen (DE)
(74) Vertreter: Wolf, Eckhard, Dr.-Ing.
(86) Internationale Anmeldenummer: EP9700752
(87) Internationale Veröffentlichungsnummer: WO9742065

(56) Entgegenhaltungen:
- EP-A- 0 244 000
- EP-A- 0 539 919
- BE-A- 693 635
- US-A- 3 310 181

## Beschreibung

Die Erfindung betrifft eine fahrbare Arbeitsmaschine mit einem mehrachsigen, die Arbeitsmaschine tragenden Fahrzeugunterbau und mindestens einem an seinem freien Ende mit einem ausfahrbaren Fußteil bodenseitig abstützbaren, vorzugsweise teleskopierbaren Stützausleger, der mit einem sich zwischen einer unterbauseitigen Anlenkstelle und einer stützauslegerseitigen Anlenkstelle erstreckenden hydraulischen Arbeitszylinder um eine zur Fahrzeughochachse parallele Schwenkachse von einer ersten, vorzugsweise gegen eine Längsseite des Fahrzeugunterbaus eingeschwenkten Endstellung in eine zweite, vorzugsweise am Fahrzeugunterbau seitlich ausgestellte Endstellung verschwenkbar ist. Fahrbare Arbeitsmaschinen dieser Art sind beispielsweise Autobetonpumpen oder Mobilkrane. Die Stützausleger gewährleisten in ihrer ausgeschwenkten und auf dem Boden abgestützten Endstellung einen sicheren Stand beim Ausfahren und Verschwenken eines Betonverteilermasts oder eines Kranauslegers.

Bei einer fahrbaren Arbeitsmaschine dieser Art ist es bekannt (BE-A-693 635), die um eine vertikale Schwenkachse drehbar angelenkten Stützausleger mit Hilfe von doppelt wirkenden Hydrozylindern gegenüber dem Fahrzeugunterbau zu verschwenken. Beim Ausschwenken gelangen die Stützausleger in eine äußerste Schwenklage, die durch die Abstände zwischen den einzelnen Gelenken des als Schubkurbel ausgebildeten Koppelgetriebes gegeben ist. Die Verkehrsverhältnisse auf den Straßen und die Platzprobleme auf Baustellen lassen jedoch oft eine Abstützung der Stützausleger in voller Breite quer zum Fahrzeug nicht zu. Es ist daher häufig eine Einschränkung der Abstützbreite erforderlich.

Ausgehend hiervon liegt der Erfindung die Aufgabe zugrunde, die bekannte Arbeitsmaschine dahingehend zu verbessern, daß mit einfachen Mitteln eine Veränderung der Abstützbreite über die Stützausleger möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, die unterbauseitige Anlenkstelle bei angelenktem Arbeitszylinder durch ein Antriebselement relativ zum Fahrzeugunterbau zu verstellen und in mindestens zwei vorgegebenen Verstellpositionen am Fahrzeugunterbau zu arretieren. Grundsätzlich ist es möglich, als Antriebselement einen separaten Antriebsmotor oder Antriebszylinder vorzusehen. Von besonderem Vorteil ist es jedoch, wenn hierzu der vorhandene Arbeitszylinder verwendet wird, wobei das Fußteil in einer Zwischenstellung des Stützauslegers bodenseitig abgestützt wird und der Arbeitszylinder in dieser Zwischenstellung unter Verstellung der entriegelten unterbauseitigen Anlenkstelle betätigt wird.

Gemäß einer bevorzugten Ausgestaltung der Erfindung weist der Verstellmechanismus ein in einer Schubführung des Unterbaus geführtes, die unterbauseitige Anlenkstelle des Arbeitszylinders tragendes Schubglied auf. Eine andere vorteilhafte Ausführungsvariante sieht vor, daß der Verstellmechanismus ein an einem Drehlager des Unterbaus gelagertes, die unterbauseitige Anlenkstelle des Arbeitszylinders tragendes Kurbelglied aufweist. Die vorgegebenen Verstellpositionen werden dabei zweckmäßig durch unterbaufeste Endanschläge für das Schub- oder Kurbelglied definiert. Weiter ist ein Mechanismus zur Arretierung des Schub- oder Kurbelglieds in den vorgegebenen Verstellpositionen am Fahrzeugunterbau vorgesehen. Der Arretierungsmechanismus kann dabei einen in einander überlappende Durchbrüche des Fahrzeugunterbaus und des Schub- oder Kurbelglieds einführbaren Arretierungsbolzen aufweisen. Weiter kann ein motorisches oder als Antriebszylinder ausgebildetes Antriebselement zur Ansteuerung des Arretierungsmechanismus vorgesehen werden.

Zur Verstellung des Schwenkbereichs des erfindungsgemäßen Stützauslegers wird vorteilhafterweise der Stützausleger unter Einwirkung des Arbeitszylinders bei vom Boden abgehobenem Fußteil von einer der Endstellungen aus in eine Zwischenstellung verschwenkt. In der Zwischenstellung wird das Fußteil auf dem Boden abgestützt. Sodann wird die Arretierung der unterbauseitigen Anlenkstelle gelöst und der Arbeitszylinder unter Verstellen der Anlenkstelle bis zu einer vorgegebenen Verstellposition betätigt. Nach Erreichen der vorgegebenen Verstellposition wird der Anlenkpunkt am Fahrzeugunterbau wieder arretiert, das Fußteil vom Boden abgehoben und der Stützausleger von der Zwischenstellung aus unter der Einwirkung des Arbeitszylinders in die andere Endstellung geschwenkt.

Im folgenden wird die Erfindung anhand der in der Zeichnung in schematischer Weise dargestellten Ausführungsbeispiele näher erläutert. Es zeigen
- Fig. 1: eine Ansicht einer am Straßenrand abgestellten Autobetonpumpe mit auf der Straßenseite schmal abgestützten Stützauslegern;
- Fig. 2: eine Draufsicht auf den Fahrzeugunterbau der Autobetonpumpe nach Fig. 1;
- Fig. 3: einen vergrößerten Ausschnitt aus dem Fahrzeugunterbau mit in eine Zwischenstellung ausgeschwenktem Stützausleger und als Schubglied ausgebildetem Verstellmechanismus für die unterbauseitige Anlenkstelle des Arbeitszylinders;
- Fig. 4: eine Darstellung entsprechend Fig. 3 mit einem als Kurbelschwinge ausgebildeten Verstellmechanismus für die unterbauseitige Anlenkstelle.

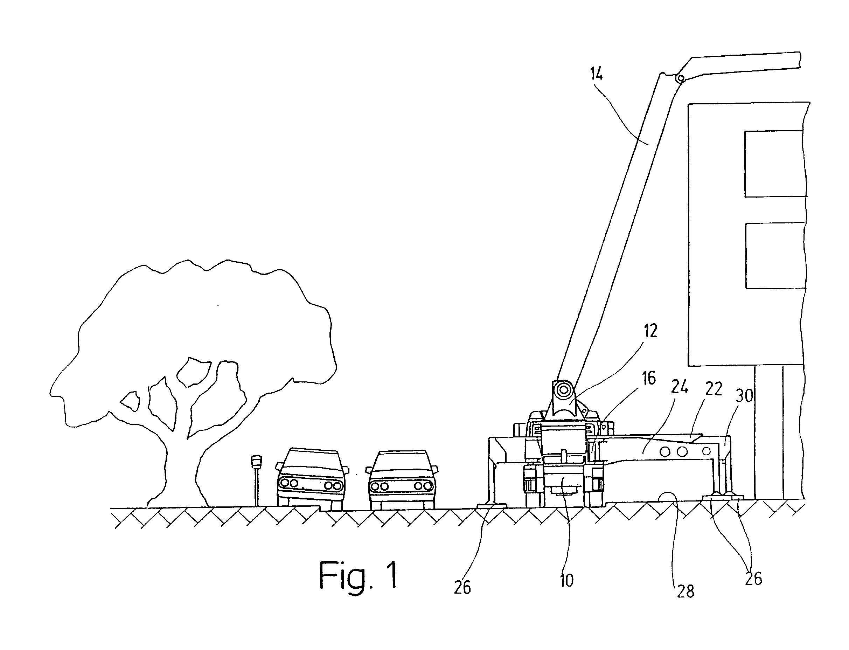

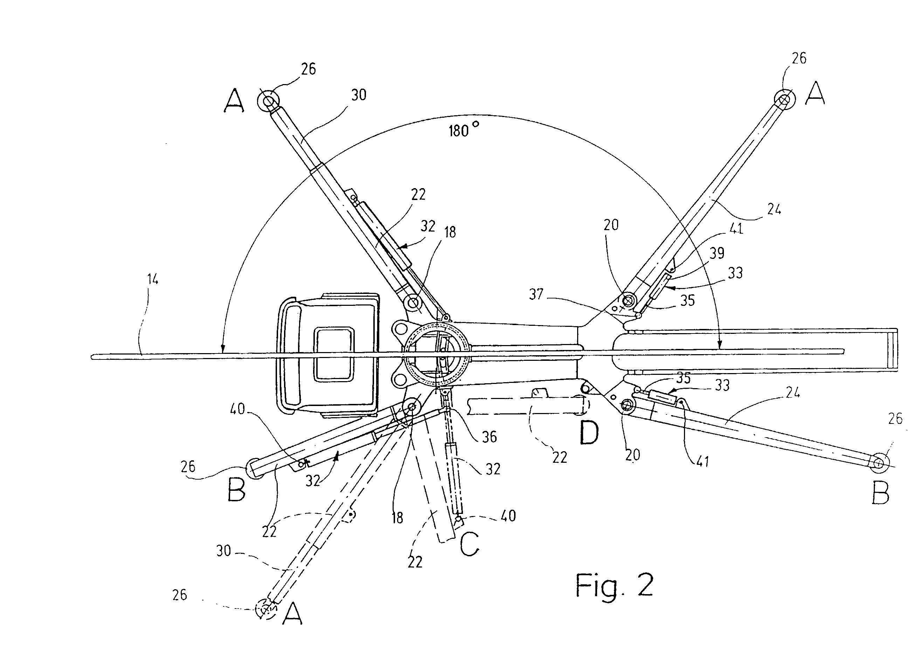

Die in Fig. 1 dargestellte fahrbare Betonpumpe besteht im wesentlichen aus einem mehrachsigen Fahrzeugunterbau 10, einem an einem vorderachsnahen Mastbock 12 um eine vertikale Achse drehbar gelagerten Betonverteilermast 14 und einer Stützkonstruktion, die einen unterbaufesten Tragrahmen 16 und je zwei am Tragrahmen 16 um lotrechte Achsen 18,20 verschwenkbare vordere und hintere Stützausleger 22,24 aufweist. Die Stützausleger 22,24 sind mit einem nach unten ausfahrbaren Fußteil 26 auf dem Boden 28 abstützbar. Die Fußteile 26 der vorderen Stützausleger 22 befinden sich an einem teleskopartig ausfahrbaren Auslegerteil 30. Zum Verschwenken der Stützausleger 22,24 sind hydraulische Arbeitszylinder 32,33 vorgesehen, deren Kolbenstange 34,35 an einer unterbauseitigen Anlenkstelle 36,37 und deren Zylinderteil 38,39 an einer stützauslegerseitigen Anlenkstelle 40,41 angelenkt sind. Im Fahrzustand der Autobetonpumpe befinden sich die Stützausleger 22,24 in einer gegen eine Längsseite des Fahrzeugunterbaus eingeschwenkten, nach hinten weisenden Endstellung. Von dieser Endstellung aus können die Stützausleger unter der Einwirkung der Arbeitszylinder 32,33 in eine am Fahrzeugunterbau seitlich ausgestellte Endstellung verschwenkt werden. Im oberen Teil der Fig. 2 ist die normale ausgestellte Endstellung A der Stützausleger 22,24 dargestellt, die auch in Fig. 1 im rechten Teil des Fahrgestells zu sehen ist. Auf der unteren Seite der Fig. 2 und im linken Teil der Autobetonpumpe nach Fig. 1 sind die Stützausleger 22,24 in einer Endstellung B gezeigt, die näher beim Fahrgestell liegt. Um die Abstützposition B zu erreichen, brauchen die rückwärtigen Stützausleger 24 über die zugehörigen Arbeitszylinder 33 nur um ein etwas kleineres Winkelmaß verschwenkt zu werden als in der Endposition A. Bei den vorderen Stützauslegern, die in ihrer ausgestellten Endpositon um mehr als 90° gegenüber der Fahrposition D ausgeschwenkt werden, ist beim Ausschwenken in die schmal abgestützte Endposition B im Zuge des Ausstellvorgangs eine Änderung der Schwenkkinematik durch Verstellen der unterbauseitigen Anlenkstelle 36 erforderlich.

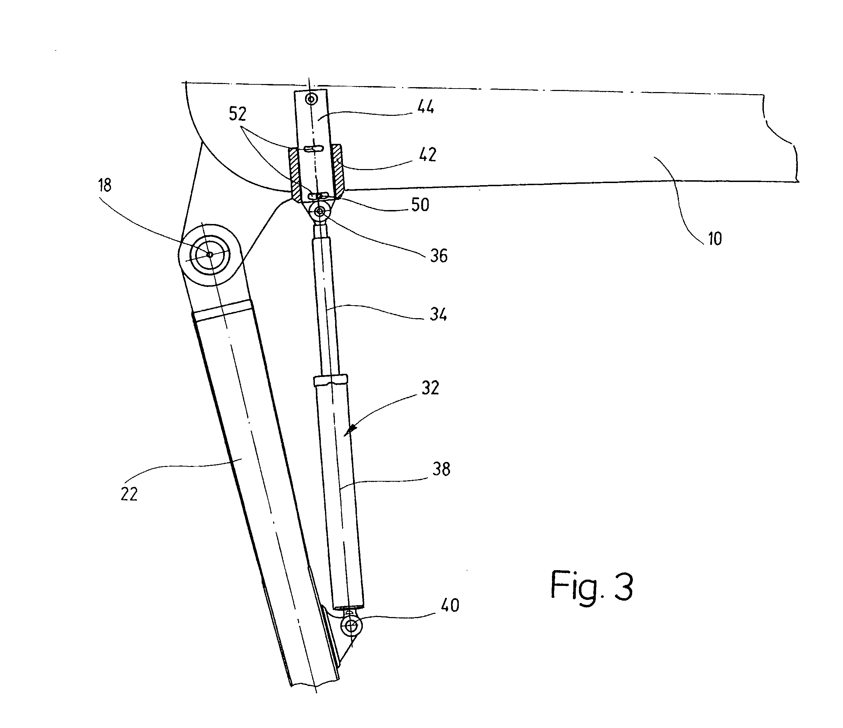

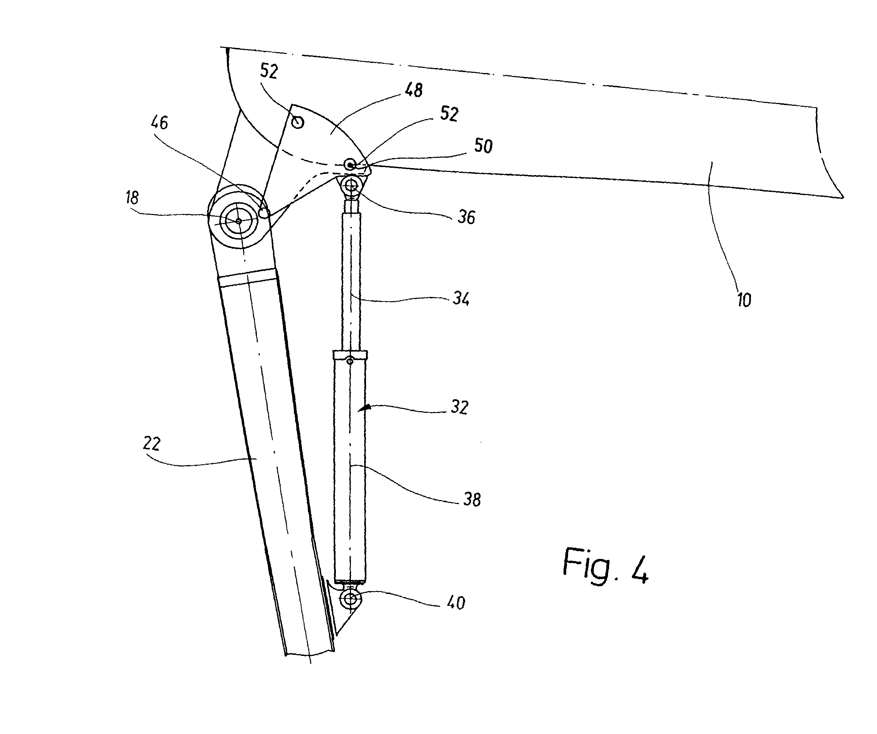

Die Verstellung der Anlenkstelle erfolgt mit Hilfe eines Verstellmechanismus der im Falle der Fig. 2 und 3 als in einer unterbaufesten Schubführung 42 verschiebbares, die Anlenkstelle 36 tragendes Schubglied 44 und im Falle der Fig. 4 als um eine unterbaufeste Drehachse 46 verschwenkbares, die Anlenkstelle 36 tragendes Kurbelglied 48 ausgebildet ist. Das Schubglied 44 und das Kurbelglied 48 sind mit Hilfe eines Arretierungsbolzens 50 in den vorgegebenen, durch Durchbrüche 52 gebildeten Verstellpositionen am Unterbau arretierbar.

Beim Ausstellen in die Endstellung B werden die vorderen Stützausleger 22 zunächst von der eingeschwenkten Endstellung D aus in eine Zwischenstellung C ausgeschwenkt. Die Anlenkstelle 36 befindet sich hierbei in ihrer normalen, unterbaunahen Verstellposition, von der aus eine Verstellung des vorderen Stützauslegers 22 auch in die normale Endstellung A möglich wäre. In der Zwischenstellung C fluchtet die Kolbenstange 34 des Antriebszylinders 32 mit der Schubführung 42. Wird in der Zwischenstellung C das Fußteil 26 auf den Boden 28 abgesenkt, so kann das Schubglied 44 bei herausgezogenem Arretierungsbolzen 50 in seine äußere Verstellposition 52 verschoben und dort anschließend mit dem Arretierungsbolzen 50 gesichert werden. Dabei gelangt die Anlenkstelle 36 in die in Fig. 2 gezeigte Lage, von der aus der Stützausleger 22 bei abgehobenem Fußteil 26 in die Endstellung B geschwenkt werden kann. In der Endstellung B braucht das Auslegerteil 30 des Stützauslegers 22 nicht teleskopiert zu werden. Bei dem einseitig schmal abgestützten Fahrzeug gemäß Fig. 2 befindet sich der zulässige Arbeitsbereich des Betonverteilermasts 14 auf der breit abgestützten Seite und überstreicht dort einen Winkelbereich von 180°.

Das Zurückschwenken des Stützauslegers 22 aus der schmal abgestützten Position B erfolgt in umgekehrter Reihenfolge über die Zwischenstellung C, in der bei abgestütztem Fußteil 26 die Anlenkstelle 36 wieder in die unterbaunahe Verstellposition verschoben wird, bevor der Stützausleger 22 in seine Fahrposition D zurückgeschwenkt werden kann.

Die Betätigung des in Fig. 4 gezeigten, als Kurbelschwinge ausgebildeten Verstellmechanismus erfolgt in ähnlicher Weise wie die Verstellung des in Fig. 2 und 3 gezeigten linearen Verstellmechanismus ebenfalls über eine Zwischenposition C. Der einzige Unterschied besteht dort darin, daß das Kurbelglied 48 um die Drehachse 46 bei gelöstem Arretierungsbolzen 50 mit Hilfe des Arbeitszylinders 32 verschwenkt und nicht verschoben wird. Auch dabei wird die unterbauseitige Anlenkstelle 36 von ihrer unterbaunahen in ihre unterbauferne Verstellposition so positioniert, daß sich die Kinematik des Ausstellvorgangs in der oben beschriebenen Weise ändert.

Zusammenfassend ist folgendes festzustellen: Die Erfindung bezieht sich auf eine fahrbare Arbeitsmaschine, insbesondere eine Autobetonpumpe oder einen Mobilkran. Die fahrbare Arbeitsmaschine weist einen Fahrzeugunterbau 10 und mindestens einen an seinem freien Ende mit einem ausfahrbaren Fußteil 26 bodenseitig abstützbaren, vorzugsweise teleskopierbaren Stützausleger 22 auf, der mit einem sich zwischen einer unterbauseitigen Anlenkstelle 36 und einer stützauslegerseitigen Anlenkstelle 40 erstreckenden hydraulischen Arbeitszylinder 32 um eine zur Fahrzeughochachse parallele Schwenkachse 18 von einer ersten, gegen eine Längsseite des Fahrzeugunterbaus 10 eingeschwenkten Endstellung D in eine zweite, am Fahrzeugunterbau seitlich ausgestellte Endstellung A,B verschwenkbar ist. Um eine einseitige Schmalabstützung des Fahrzeugs bei ausreichender Standsicherheit zu erzielen, wird gemäß der Erfindung vorgeschlagen, daß die unterbauseitige Anlenkstelle 36 bei angelenktem Arbeitszylinder 32 durch ein Antriebselement relativ zum Fahrzeugunterbau 10 verstellbar und in mindestens zwei vorgegebenen Verstellpositionen am Fahrzeugunterbau 10 arretierbar ist.

## Patentansprüche

1. Fahrbare Arbeitsmaschine mit einem mehrachsigen, die Arbeitsmaschine (12,14) tragenden Fahrzeugunterbau (10) und mindestens einem an seinem freien Ende mit einem ausfahrbaren Fußteil (26) bodenseitig abstützbaren, vorzugsweise teleskopierbaren Stützausleger (22), der mit einem sich zwischen einer unterbauseitigen Anlenkstelle (36) und einer stützauslegerseitigen Anlenkstelle (40) erstreckenden hydraulischen Arbeitszylinder (32) um eine zur Fahrzeughochachse parallele Schwenkachse (18) von einem ersten, vorzugsweise gegen eine Längsseite des Fahrzeugunterbaus (10) eingeschwenkten Endstellung (D) in eine zweite, vorzugsweise am Fahrzeugunterbau seitlich ausgestellte Endstellung (A,B) verschwenkbar ist, **dadurch gekennzeichnet**, daß die unterbauseitige Anlenkstelle (36) bei an dieser angelenktem Arbeitszylinder (32) durch ein Antriebselement (32) relativ zum Fahrzeugunterbau (10) verstellbar und in mindestens zwei vorgegebenen Verstellpositionen (52) am Fahrzeugunterbau arretierbar ist.

2. Arbeitsmaschine nach Anspruch 1, **dadurch gekennzeichnet**, daß das Antriebselement durch den Arbeitszylinder (32) gebildet ist.

3. Arbeitsmaschine nach Anspruch 1 oder 2, **gekennzeichnet durch** ein in einer Schubführung (42) des Fahrzeugunterbaus (10) geführtes, die unterbauseitige Anlenkstelle (36) des Arbeitszylinders (32) tragendes Schubglied (44).

4. Arbeitsmaschine nach Anspruch 1 oder 2, **gekennzeichnet durch** ein um eine unterbaufeste Drehachse (46) verschwenkbares, die unterbauseitige Anlenkstelle (36) des Arbeitszylinders (32) tragendes Kurbelglied (48).

5. Arbeitsmaschine nach Anspruch 3 oder 4, **gekennzeichnet durch** einen Mechanismus zur Arretierung des Schub- oder Kurbelglieds (44,48) in den vorgegebenen Verstellpositionen (52) am Fahrzeugunterbau (10).

6. Arbeitsmaschine nach einem der Ansprüche 2 bis 5, **dadurch gekennzeichnet**, daß das Fußteil (26) in einer Zwischenstellung (C) des Stützauslegers (22) bodenseitig abstützbar ist und daß der Arbeitszylinder (32) in dieser Zwischenstellung (C) unter Verstellung der unterbauseitigen Anlenkstelle (36) betätigbar ist.

7. Arbeitsmaschine nach einem der Ansprüche 1 bis 6, **gekennzeichnet durch** die vorgegebenen Verstellpositionen (52) definierende unterbaufeste Endanschläge für das Schub- oder Kurbelglied (44,48).

8. Arbeitsmaschine nach einem der Ansprüche 5 bis 7, **dadurch gekennzeichnet**, daß der Arretierungsmechanismus einen in einander überlappenden Durchbrüchen des Fahrzeugunterbaus (10) und des Schub- oder Kurbelglieds (44,48) einführbaren Arretierungsbolzen (50) umfaßt.

9. Arbeitsmaschine nach einem der Ansprüche 5 bis 8, **dadurch gekennzeichnet**, daß der Arretierungsmechanismus durch einen Motor oder Antriebszylinder betätigbar ist.

10. Verfahren zur Verstellung des Schwenkbereichs mindestens eines Stützauslegers (22) einer fahrbaren Arbeitsmaschine nach einem der Ansprüche 1 bis 9, **dadurch gekennzeichnet**, daß der Stützausleger (22) unter der Einwirkung des Arbeitszylinders (32) bei vom Boden (28) abgehobenem Fußteil von einer der Endstellungen (D,B) aus in eine Zwischenstellung (C) verschwenkt wird, daß das Fußteil (26) in der Zwischenstellung (C) auf dem Boden (28) abgestützt wird, daß sodann die Arretierung der unterbauseitigen Anlenkstelle (36) gelöst und der Arbeitszylinder (32) unter Verstellen der Anlenkstelle (36) bis zu einer vorgegebenen Verstellposition (52) betätigt wird und daß nach Erreichen der vorgegebenen Verstellposition (52) der Anlenkpunkt (36) am Fahrzeugunterbau (10) arretiert, das Fußteil (26) vom Boden (28) abgehoben und der Stützausleger (22) von der Zwischenstellung (C) aus unter Einwirkung des Arbeitszylinders (32) in die andere Endstellung (B, D) geschwenkt wird.

## Claims

1. Mobile machine comprising a multi-axle vehicle chassis (10) carrying the machine (12, 14) and at least one support strut (22), preferably telescopic, the free end of which is supportable on the ground by means of an extendable foot part (26), the support strut being pivotable, via a hydraulic working cylinder (32) which extends between a chassis-side linkage point (36) and a strut-side linkagepoint (40), about a pivot axis (18) parallel to the vehicle vertical axis between a first end position (D), preferably swung in against the longitudinal side of the vehicle chassis (10), and a second end position (A,B), preferably extending sideways out from the vehicle chassis (10), thereby characterized, that the chassis-side linkage point (36) with the thereto linked work cylinder (32) is adjustable relative to the vehicle chassis (10) by a drive element (32) and is lockable in at least two predetermined adjustment positions (52) on the vehicle chassis.

2. Machine according to Claim 1, thereby characterized, that the drive element is formed by the working cylinder (32).

3. Machine according to Claim 1 or 2, characterized by a thrust element (44) which is guided in a thrust guide (42) of the vehicle chassis (10) and which bears the chassis-side linkage point (36) of the work cylinder (32).

4. Machine according to Claim 1 or 2, characterized by a rotating link element (48) which is rotatable about a rotation axis (46) fixed with respect to the chassis and which bears the chassis-side linkage point (36) of the work cylinder (32).

5. Machine according to Claim 3 or 4, characterized by a mechanism for locking the thrust or rotating element (44, 48) in a predetermined adjustment positions (52) on the vehicle chassis (10).

6. Machine according to one of Claims 2 through 5, thereby characterized, that the foot part (26) is supportable upon the ground in an intermediate position (C) of the strut (22) and that the work cylinder (32) is operable in this intermediate position (C) under adjustment of the chassis-side linkage point (36).

7. Machine according to one of Claims 1 through 6, characterized by the fixed end stops which define the predetermined adjustment positions (52) fixed on the chassis for the thrust or rotating element (44, 48).

8. Machine according to one of Claims 5 through 7, thereby characterized, that the locking mechanism includes a locking bolt (50) insertable through through-holes of the vehicle chassis (10) and the thrust or rotating element (44, 48) overlapping with each other.

9. Machine according to one of Claims 5 through 8, thereby characterized, that the locking mechanism is operable by a motor or drive cylinder.

10. Device for shifting the pivot range of at least one strut (22) of a mobile machine according to one of Claims 1 through 9, thereby characterized, that the strut (22) under the influence of the work cylinder (32), with the foot part raised from the ground (28), is pivoted from one of the end positions (D, B) into an intermediate position (C), that the foot part (26) is supported on the ground (28) in the intermediate position (C), that then the lock of the chassis-side linkage point (36) is released and the work cylinder (32) with adjustment of the linkage point (36) up to a predetermined adjustment position (52) is operated and that after achieving the predetermined adjustment position (52) the linkage point (36) is locked on the vehicle chassis (10), the foot part (26) is lifted from the ground (28) and the support strut (22) is pivoted out from the intermediate position (C) under influence of the work cylinder (32) into the other end position (B, D).

## Revendications

1. Engin mobile muni d'un châssis de véhicule (10) à plusieurs essieux et portant la machine de travail (12, 14), et d'au moins un bras d'appui (22), de préférence télescopique, pouvant s'appuyer du côté du sol sur son extrémité libre à l'aide d'une pièce de pied (26) mobile qui, au moyen d'un cylindre de travail (32) hydraulique s'étendant entre un point d'articulation (36) du côté du châssis et un point d'articulation (40) du côté du bras d'appui, est orientable autour d'un axe de pivotement (18) parallèle à l'axe vertical du véhicule, pour aller d'une première position finale (D) rétractée de préférence contre un côté longitudinal du châssis de véhicule (10), dans une seconde position finale (A, B) déployée de préférence latéralement sur le châssis du véhicule, **caractérisé en ce que** le point d'articulation (36) du côté du châssis est, dans le cas de ce cylindre de travail (32) articulé sur ce point, réglable par rapport au châssis de véhicule (10) au moyen d'un élément d'entraînement (32), et qu'il peut être bloqué sur le châssis de véhicule dans au moins deux positions de réglage (52) prédéfinies.

2. Engin mobile selon la revendication 1, **caractérisé en ce que** l'élément d'entraînement est formé par le cylindre de travail (32).

3. Engin mobile selon la revendication 1 ou 2, **caractérisé par** un élément de poussée (44) guidé dans un guidage de poussée (42) du châssis de véhicule (10) et portant le point d'articulation (36) du cylindre de travail (32) du côté du châssis.

4. Engin mobile selon la revendication 1 ou 2, **caractérisé par** un élément de manivelle (48) pivotant autour d'un axe de rotation (46) fixé sur le châssis et portant le point d'articulation (36) du cylindre de travail (32) du côté du châssis.

5. Engin mobile selon la revendication 3 ou 4, **caractérisé par** un mécanisme pour bloquer l'élément de poussée ou l'élément de manivelle (44, 48) sur le châssis du véhicule (10) dans les positions de réglage prédéfinies (52).

6. Engin mobile selon l'une des revendications 2 à 5, **caractérisé en ce que** la pièce de pied (26) peut être appuyée du côté du sol dans une position intermédiaire (C) du bras d'appui (22) et que le cylindre de travail (32) peut être actionné dans cette position intermédiaire (C) en réglant le point d'articulation (36) du côté du châssis.

7. Engin mobile selon l'une des revendications 1 à 6, **caractérisé par** les butées fixées sur le châssis pour l'élément de poussée ou l'élément de manivelle (44, 48) déterminant les positions de réglage (52) prédéfinies.

8. Engin mobile selon l'une des revendications 5 à 7, **caractérisé en ce que** le mécanisme de blocage comprend un boulon de blocage (50) pouvant être inséré dans des ouvertures du châssis de véhicule (10) et de l'élément de poussée ou de l'élément de manivelle (44, 48) se recouvrant mutuellement.

9. Engin mobile selon l'une des revendications 5 à 8, **caractérisé en ce que** le mécanisme de blocage peut être actionné par un moteur ou un cylindre d'entraînement.

10. Procédé pour le réglage de la zone pivotante d'au moins un bras d'appui (22) d'un engin mobile selon l'une des revendications 1 à 9, **caractérisé en ce que** le bras d'appui (22) est pivoté depuis l'une des positions terminales (D, B) dans une position intermédiaire (C) sous l'effet du cylindre de travail (32) lorsque la pièce de pied est soulevée du sol (28), **en ce que** la pièce de pied (26) est appuyée au sol (28) dans la position intermédiaire (C), qu'ensuite le blocage du point d'articulation (36) du côté du châssis est relâché et que le cylindre de travail (32) est actionné jusqu'à une position (52) prédéfinie en réglant le point d'articulation (36) et qu'après avoir atteint la position de réglage prédéfinie (52), le point d'articulation (36) sur le châssis du véhicule (10) est bloqué, la pièce de pied (26) est soulevée du sol (28) et le bras d'appui (22) est pivoté de la position intermédiaire (C) dans l'autre position terminale (B, D) sous l'effet du cylindre de travail (32).
